Europäisches Patentamt

European Patent Office

Office européen des brevets

(19)

(11) Numéro de publication: **0 225 231 B1**

(12)

# FASCICULE DE BREVET EUROPEEN

(45) Date de publication de fascicule du brevet:
**07.08.91**

(51) Int. Cl.5: **H04M 19/08**, H04M 11/04

(21) Numéro de dépôt: **86402402.1**

(22) Date de dépôt: **27.10.86**

(54) **Dispositif de connexion et d'alimentation pour transmetteur téléphonique.**

(30) Priorité: **28.10.85 FR 8515998**

(43) Date de publication de la demande:
**10.06.87 Bulletin 87/24**

(45) Mention de la délivrance du brevet:
**07.08.91 Bulletin 91/32**

(84) Etats contractants désignés:
**BE CH DE ES GB GR IT LI LU**

(56) Documents cités:
**EP-A- 0 080 396**
**DE-A- 2 813 580**
**DE-A- 3 125 328**
**FR-A- 2 533 097**
**US-A- 4 532 382**

(73) Titulaire: **SOCIETE MODERNE D'ELECTRONI-
QUE**
**Villa Mallebay 88 rue Didot**
**F-75014 Paris(FR)**

(72) Inventeur: **Tholozan, Eric**
**51, rue Barbès**
**F-92120 Montrouge(FR)**
Inventeur: **Hourbrack, Christian**
**85, rue Saint-Maur**
**F-75011 Paris(FR)**

(74) Mandataire: **Plaçais, Jean-Yves**
**Cabinet Netter, 40, rue Vignon**
**F-75009 Paris(FR)**

Rank Xerox (UK) Business Services

## Description

Dispositif de connexion et d'alimentation pour transmetteur téléphonique.

L'invention concerne les transmetteurs téléphoniques, en particulier les transmetteurs téléphoniques d'alarme.

On sait qu'un système d'alarme ou de surveillance est composé de deux types d'appareils : les uns sont des détecteurs tels que des radars, des contacts, etc. ; les autres sont des organes d'action tels qu'un transmetteur téléphonique d'alarme, une sirène, un flash, etc.

Les organes d'alarme locale tels que les sirènes et les flashes deviennent de moins en moins efficaces, car les cambrioleurs sont souvent en mesure de les neutraliser, ce qui fait croire d'ailleurs qu'une intervention a eu lieu.

Par contre, du fait de son intervention tout à fait silencieuse, le transmetteur téléphonique d'alarme joue un rôle de plus en plus important. Ce rôle peut même s'étendre à la prévention, lorsque le transmetteur permet une surveillance de la ligne téléphonique, voire la réponse par un message dissuasif (DE-A-2 813 580, DE-A-3 125 328).

On sait maintenant réaliser des détecteurs radar possédant une longue autonomie. Il n'en est pas de même pour les transmetteurs.

La présente invention a pour but de résoudre le problème consistant à donner à un transmetteur téléphonique d'alarme une autonomie aussi longue que possible.

Un autre aspect de ce problème est d'obtenir l'autonomie sans faire appel à l'alimentation secteur, dont on sait que les cambrioleurs la neutralisent la plupart du temps avant d'agir.

Un autre aspect encore de ce problème consiste à éviter le recours permanent à des piles, compte tenu des variations très importantes de la puissance d'alimentation demandée par un transmetteur suivant son état de fonctionnement. Plus précisément, il s'agit de ne recourir à l'alimentation par piles tout au plus que lorsque le transmetteur est en état de veille et/ou à titre de secours.

Ainsi, la présente invention concerne un dispositif de connexion et d'alimentation pour transmetteur téléphonique, en particulier pour transmetteur d'alarme. Ce dispositif est du type comportant un circuit à relais pour le branchement du transmetteur ou d'un poste téléphonique à la ligne téléphonique à travers un quadripôle de protection, des moyens de commande de prise de ligne ainsi que de fermeture de ligne, et des moyens d'alimentation en tension continue à partir de la tension de ligne.

Selon un premier aspect de l'invention, les moyens d'alimentation comprennent un premier redresseur branché à la ligne en amont du relais, et un second redresseur branché à la ligne en aval du relais, et un second redresseur branché à la ligne en aval du relais ; de son côté, le relais comprend deux bobines d'actionnement dont l'une est commandée par au moins un premier transistor, de prise de ligne, sous alimentation à partir du premier redresseur lorsque la ligne est connectée au poste téléphonique (état de veille), et dont l'autre est commandée par au moins un second transistor, sous alimentation à partir du second redresseur lorsque la ligne est connectée au transmetteur (état actif).

Selon un autre aspect de l'invention, le second redresseur est suivi d'un étage à transistors pour la prise de ligne effective, suivi à son tour d'un générateur de courant constant qui permet l'alimentation d'amplificateurs de réception, ainsi que de modulation à l'émission, au moins.

Selon un troisième aspect de l'invention, l'alimentation de certains circuits (ceux qui demeurent opératoires à l'état de veille du transmetteur, en particulier son microprocesseur et ses annexes) est assurée complémentairement par la sortie du générateur de courant constant, à partir du second redresseur, lorsque la ligne est connectée au transmetteur (état actif), et à partir du premier redresseur, lorsque la ligne est connectée au poste téléphonique (état de veille).

De préférence, il est prévu en outre une alimentation par piles, au moins à titre de secours et/ou à l'état de veille; cette alimentation permet par exemple la sauvergarde d'informations mémorisées dans le transmitteur, c'est-à-dire dans la mémoire de son microprocesseur, lorsque la ligne est défaillante.

Dans un mode de réalisation particulier, le premier redresseur comprend un pont alimentant directement la première bobine, tandis qu'il alimente le reste du circuit à travers une résistance de limitation de courant à environ 10 micro-ampères.

De son côté, le second redresseur peut comprendre lui aussi un pont, suivi d'une diode, et d'un condensateur en parallèle vers la masse, pour l'alimentation de la seconde bobine.

En ce qui le concerne, le second transistor est avantageusement muni d'un condensateur permettant le relâchement de la ligne en cas de prise de ligne intempestive, non commandée. Ce condensateur est de préférence en parallèle sur une diode Zener.

Le second transistor est très avantageusement un transistor VMOS, précédé d'un étage de commande à transistor bipolaire.

Pour sa part, l'étage à transistors pour la prise de ligne effective est de préférence précédé d'un étage de commande à collecteur ouvert.

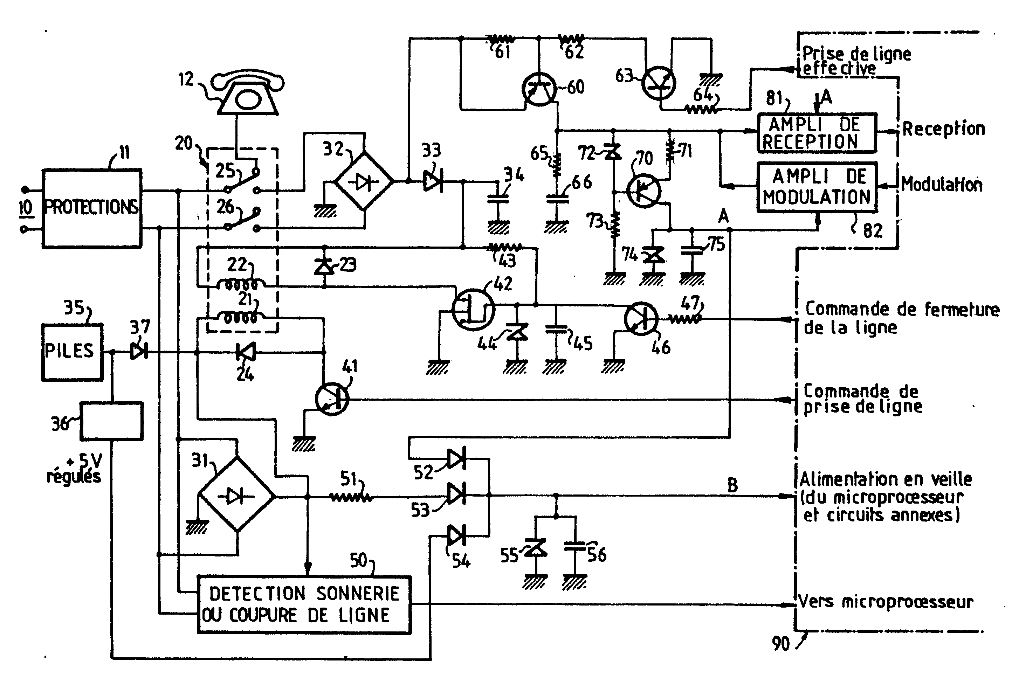

D'autres caractéristiques et avantages de l'invention apparaîtront à l'examen de la description détaillée ci-après, et du dessin annexé dont la figure unique illustre un mode de réalisation préférentiel d'un dispositif de connexion et d'alimentation pour transmetteur téléphonique d'alarme selon l'invention.

Sur la figure, l'arrivée de la ligne téléphonique est illustrée en 10. Les deux fils de ligne se trouvent alors reliés à un quadripôle de protection 11, qui peut être de type connu. Les deux sorties du quadripôle 11 arrivent sur les contacts mobiles 25 et 26 d'un relais 20 muni de deux bobines de commande 21 et 22.

Un premier pont redresseur 31 a ses deux entrées branchées directement à la sortie du quadripôle de protection 11. L'une de ses sorties est à la masse. L'autre alimente directement l'une des extrémités de la bobine 21, sur laquelle est mise en parallèle, en inverse, une diode 24.

Les contacts 25 et 26 peuvent prendre une position normale dans laquelle ils relient la ligne à un poste téléphonique 12. Dans la position qui correspond à l'activation du transmetteur, ces contacts relient la ligne aux deux entrées d'un second pont redresseur 32. L'une des sorties de celui-ci est à la masse; l'autre est reliée à l'anode d'un diode 33, suivie d'un condensateur 34 aboutissant à la masse. Le point commun entre la diode 33 et le condensateur 34 est relié à une extrémité de la bobine 22, qui reçoit elle aussi en parallèle une diode 23 montée en inverse.

L'autre extrémité de la bobine 21 est branchée au collecteur d'un transistor 41 (ici bipolaire NPN) dont l'émetteur est à la masse et dont la base reçoit un signal de commande de prise de ligne de l'ensemble 90 qui comprend le microprocesseur et ses circuits annexes formant le transmetteur proprement dit. De façon non limitative, on admettra que l'ensemble 90 peut être l'organe 52 décrit dans la Demande de Brevet français n° 82 15024, déposée le 2 Septembre 1982 au nom de la Demanderesse, ou bien un montage analogue.

Le bloc 35 illustre un ensemble de piles, qui sont connectées à un circuit 36 propre à fournir une tension de 5 volts régulée. L'ensemble de piles est également relié à l'anode d'une diode 37, dont la cathode est reliée à l'extrémité de la bobine 21 qui se trouve également reliée au pont redresseur 31. La commande de prise de ligne peut donc se faire soit par alimentation à partir de la ligne elle-même à travers le pont 31, soit, à titre de secours, par les piles 35.

De son côté, l'autre extrémité de la bobine 22 est reliée à un transistor 42 (ici du type VMOS canal N), dont la source est à la masse. La grille de ce transistor 42 est reliée au montage parallèle d'une diode Zener 44 et d'un condensateur 45 allant tous deux vers la masse. Elle est également reliée par une résistance 43 à l'extrémité de la bobine 22 qui est alimentée par le pont 32 et la diode 33. Enfin, la grille du transistor 42 est aussi reliée au collecteur (ouvert) d'un transistor de commande 46 (ici bipolaire NPN) dont l'émetteur est à la masse et dont la base reçoit à travers une résistance 47 un signal de commande de "relaché" de la ligne depuis l'ensemble 90. Ce "relaché" renvoie la ligne vers le poste 12, en faisant basculer le relais 20.

La sortie active du pont 32 est encore reliée au collecteur d'un transistor bipolaire 60 (ici PNP). Ce collecteur est relié à la base du même transistor par une résistance 61. L'émetteur du transistor 60 est relié par une résistance 65 et un condensateur 66 à la masse. La base du transistor 60 est encore reliée par une résistance 62 au collecteur d'un autre transistor bipolaire 63 (ici NPN) dont l'émetteur est à la masse et dont la base reçoit, à travers une résistance 64, un signal de commande de prise de ligne effective ("fermeture de ligne") en provenance de l'ensemble 90.

Le collecteur déjà cité du transistor 60 est relié à un montage qui forme le générateur de courant constant. Ce montage est constitué d'un transistor 70 (ici bipolaire PNP), dont la base est reliée à la masse à travers une résistance 73, ainsi qu'au collecteur du transistor 60 à travers une diode Zener 72. Le collecteur du transistor 70 est relié par une résistance 71 au point commun de la diode Zener 72 et de la résistance 65. L'émetteur du transistor 70 est relié au montage parallèle d'une diode Zener 74 et d'un condensateur 75 allant tous deux vers la masse. On obtient ainsi, sur le collecteur du transistor 70, noté point A, une alimentation à courant constant, régulée en tension par la diode Zener 74. Cette tension sert à l'alimentation d'un amplificateur de réception 81, branché sur la sortie du transistor 60, et opérant donc lorsque la prise de ligne est effective. Dans les mêmes conditions, un amplificateur de modulation 82 peut fonctionner, alimenté à partir du point A. Enfin, la tension disponible en A alimente d'autres circuits, comme on le verra ci-après.

L'alimentation en veille de l'ensemble 90 peut être assurée de deux manières :

- normalement, le pont 31 réalise cette alimentation à travers une résistance 51 et la diode 53, reliées au point B qui assure ladite alimentation de l'ensemble 90. Ce point B se trouve relié à la masse par l'ensemble parallèle de la diode Zener 55 et du condensateur 56. La tension de 5 volts régulée disponible en sortie de l'organe 36, à partir des piles, peut être également utilisée à travers la diode 54 pour alimenter le point B.

- après que la prise de ligne a été effective, l'alimentation du point B se trouve réalisée à partir du point A, à travers la diode 52. Dans cette condition, l'ensemble 90 n'est naturellement plus à l'état de veille. On reconnaît la fonction OU d'alimentation que réalisent les trois diodes 52, 53 et 54 reliées par leurs cathodes à un point commun.

Enfin, un circuit 50 permet la détection de sonnerie ainsi que la détection de la coupure de ligne, se trouvant relié à la sortie du quadripôle de protection 11, et informant l'ensemble 90 d'anomalies éventuellement détectées.

Il est maintenant possible de décrire le fonctionnement du dispositif de connexion et d'alimentation pour transmetteur téléphonique d'alarme.

En temps normal, le relais 20 relie la ligne au poste téléphonique. L'ensemble 90 est à l'état de veille, où sa consommation peut être rendue très faible. Il est alimenté à travers le pont 31 et la résistance 51 ainsi que la diode 53.

L'ensemble de piles 35 peut alors être soit un groupe de piles de 1,5 volt, comme c'est le cas dans le mode de réalisation illustré, soit une simple pile au lithium, destinée seulement à la sauvegarde des informations mémorisées dans la mémoire du microprocesseur faisant partie de l'ensemble 90.

En cas d'alarme, ou pour d'autres raisons, cet ensemble 90 établit d'abors une commande de prise de ligne, qui actionne un transistor 41 pour exciter la bobine 21 et par conséquent faire basculer les contacts 25 et 26 dans la position basse. Pendant ce temps, l'alimentation est fournie par le pont 31.

Après ces opérations, le pont 32 est alimenté. Il permet la charge des condensateurs 34 et 45.

Dans les conditions normales, cette commande de prise de ligne est suivie d'une prise de ligne effective par l'action de l'ensemble 90 sur les transistors 63 et 60. C'est alors le générateur de courant articulé autour du transistor 70 qui prend le relais de l'alimentation de l'ensemble du montage assurant la transmission téléphonique proprement dite, à savoir notamment les organes 81 et 82, ainsi que l'ensemble 90.

Mais il est possible de rencontrer la situation d'une commande de prise de ligne intempestive, non suivie d'une prise de ligne effective.

Dans ce cas, les condensateurs 34 et 45 définissent une double constante de temps qui permet, d'une part d'accumuler de l'énergie, d'autre part d'assurer le relâché de ligne volontaire après la prise de ligne involontaire, par action sur le transistor 42.

L'homme de l'art comprendra maintenant que le dispositif selon l'invention permet l'alimentation d'un transmetteur téléphonique essentiellement à partir de la ligne téléphonique elle-même, dans le respect de normes téléphoniques, de la manière décrite ci-dessus.

On en donnera maintenant un exemple particulier.

Exemple :
Tension de ligne : 48 volts
Courant de veille des organes 90 : 10 microampères
Résistance 51 : 5 mégohms
Courant nécessaire à l'état actif : 25 milliampères environ.

Relais 20 à verrouillage du type DSZE-ML2-DC5V, vendu par la Société SDS de R.F.A. capable de temps de collage, de coupure et de rebondissement respectivement 3ms, 2ms et 0.5ms. Le courant de bobine nécessaire à la commutation ne dépasse pas 20 mA.

Condensateur 34 valant 2,2 microfarads (250 volts),pour éviter les rebonds du relais au relaché de ligne, avec une résistance 43 de 1 mégohm, un condensateur 45 de 100 nanoFarads, et une diode Zener 44 de 6 volts en protection du transistor 42.

Générateur à courant constant (70), éventuellement dédoublé, fournissant environ 20 mA sous 5 volts.

## Revendications

1. Dispositif de connexion et d'alimentation pour transmetteur téléphonique, en particulier pour transmetteur d'alarme, comportant un circuit à relais (20) pour le branchement du transmetteur ou d'un poste téléphonique à une ligne téléphonique (10) à travers un quadripôle de protection (11) des moyens de commande de prise de ligne (41) et de fermeture de ligne (42, 46), ainsi que des moyens d'alimentation en tension continue (31, 32) à partir de la tension de ligne, caractérisé

en ce que les moyens d'alimentation comprennent un premier redresseur (31) branché à la ligne (10) en amont du relais (20) et un second redresseur (32) branché à la ligne en aval du relais à l'entrée du transmetteur (20) et

en ce que le relais (20) comprend deux bobines (21, 22) d'actionnement, dont l'une (21) est commandée par au moins un premier transistor (41), de prise de ligne, sous alimentation à partir du premier redresseur (31) lorsque la ligne est connectée au poste téléphonique (état de veille), et dont l'autre (22) est commandée par au moins un second transistor (42), defermeture de Ligne, sous alimentation à partir du second redresseur lorsque la ligne est connectée au poste transmetteur (état actif) et en ce que les transistors (41,42) sont actionnés sous le contrôle du transmetteur.

2. Dispositif selon la revendication 1, caractérisé en ce que le second redresseur est suivi d'un étage à transistor pour la prise de ligne effective, suivi d'un générateur de courant constant qui permet au moins l'alimentation d'amplificateurs de réception ainsi que de modulation à l'émission.

3. Dispositif selon la revendication 2, caractérisé en ce que l'alimentation de certains circuits du transmetteur, qui demeurent opératoires à l'état de veille, en particulier son microprocesseur et ses annexes, est assurée complémentairement par la sortie du générateur de courant constant, à partir du second redresseur lorsqu la ligne est connectée au transmetteur (état actif), et à partir du premier redresseur, lorsque la ligne est connectée au poste téléphonique (état de veille).

4. Dispositif selon la revendication 3, caractérisé en ce qu'est prévue en outre une alimentation par piles, au moins à titre de secours et/ou à l'état de veille, et au moins pour la sauvegarde d'informations mémorisées dans le transmetteur, lorsque la ligne est défaillante.

5. Dispositif selon l'une des revendications 1 à 4, caractérisé en ce que le premier redresseur comprend un pont alimentant directement la première bobine, tandis qu'il alimente le reste du circuit à travers une résistance de limitation de courant à environ 10 microampères.

6. Dispositif selon l'une des revendications 1 à 5, caractérisé en ce que le second redresseur comprend un pont, suivi d'une diode, et d'un condensateur en parallèle vers la masse, pour l'alimentation de la seconde bobine.

7. Dispositif selon l'une des revendications 1 à 6, caractérisé en ce que le second transistor est muni d'un condensateur permettant le relâchement de la ligne en cas de prise de ligne intempestive non commandée.

8. Dispositif selon la revendication 7, caractérisé en ce que le condensateur est en parallèle sur une diode Zener.

9. Dispositif selon l'une des revendications 7 et 8, caractérisé en ce que ledit second transistor est un transistor VMOS, précédé d'un étage de commande à transistor bipolaire.

10. Dispositif selon la revendication 2 ou selon l'une des revendications 3 à 9, prise en combinaison avec la revendication 2, caractérisé en ce que l'étage à transistor pour la prise de ligne effective est précédé d'un étage de commande à collecteur ouvert.

## Claims

1. Connection and powering device for a telephone transceiver, especially for an alarm transceiver, comprising a relay circuit (20) for the connection of the transceiver or of a telephone set to a telephone line (10) via a protection quadripole (11), means for commanding line take-up (41) and line closure (42, 46), as well as means for direct-current voltage powering (31, 32) from the line voltage, characterised in that the powering means comprise a first rectifier (31) connected to the line (10) upstream of the relay (20) and a second rectifier (32) connected to the line downstream of the relay at the input of the transceiver (20) and in that the relay (20) comprises two actuating coils (21, 22), one (21) of which is commanded by at least one first transistor (41), for line take-up, under powering from the first rectifier (31) when the line is connected to the telephone set (standby condition), and the other (22) of which is commanded by at least one second transistor (42), for line closure, under powering from the second rectifier when the line is connected to the transceiver set (active condition), and in that the transistors (41, 42) are actuated under the control of the transceiver.

2. Device according to Claim 1, characterised in that the second rectifier is followed by a transistor stage for actual line take-up, followed by a constant current generator which permits at least the powering of amplifiers for reception as well as for modulation on transmission.

3. Device according to Claim 2, characterised in that the powering of certain circuits of the transceiver, which remain operational in the standby condition, especially its microprocessor and its add-ons, is provided on a supplementary basis by the output of the constant current generator, from the second rectifier when the line is connected to the transceiver (active condition), and from the first rectifier when the line is connected to the telephone set (standby condition).

4. Device according to Claim 3, characterised in that there is further provided a battery powering system, at least on an emergency basis and/or in the standby condition, and at least to protect data stored in the transceiver, when the line fails.

5. Device according to one of Claims 1 to 4, characterised in that the first rectifier comprises a bridge directly powering the first coil, while it powers the remainder of the circuit via a resistor to limit current to approximately 10 microamperes.

6. Device according to one of Claims 1 to 5, characterised in that the second rectifier comprises a bridge, followed by a diode and by a capacitor in parallel to ground, to power the second coil.

7. Device according to one of Claims 1 to 6, characterised in that the second transistor is provided with a capacitor permitting the release of the line in the event of untimely line take-up which has not been commanded.

8. Device according to Claim 7, characterised in that the capacitor is in parallel with a Zener diode.

9. Device according to one of Claims 7 and 8, characterised in that said second transistor is a VMOS transistor, preceded by a bipolar-transistor command stage.

10. Device according to Claim 2 or according to one of Claims 3 to 9, taken in combination with Claim 2, characterised in that the transistor stage for actual line take-up is preceded by an open-collector command stage.

**Patentansprüche**

1. Verbindungs- und Speisungseinrichtung für eine Fernsprechkommunikationseinheit, insbesondere für einen Alarmsender, mit einer Relaisschaltung (20) zum Anschalten des Senders oder eines Fernsprechgerätes an eine Fernsprechleitung (10) über einen Schutzvierpol (11), Steuermitteln für Leitungsbelegung (41) und Leitungsschließung (42, 46) und Speisemitteln für Gleichspannung (31, 32) von der Leitungsspannung, dadurch gekennzeichnet, daß die Speisemittel einen ersten, dem Relais (20) an der Leitung (10) vorgeschalteten Gleichrichter (31) und einen zweiten, dem Relais (20) am Eingang des Senders an der Leitung nachgeschalteten Gleichrichter (32) umfassen, und daß das Relais (20) zwei Betätigungsspulen (21, 22) umfaßt, von denen eine (21) mittels eines ersten Transiztors (41) für Leitungsbelegung unter Speisung vom ersten Gleichrichter (31) angesteuert wird, wenn die Leitung an das Fernsprechgerät angeschlossen wird (Wachzustand) und die andere (22) mit mindestens einem zweiten Transistors (42) für Leitungsschließung unter Speisung vom zweiten Gleichrichter angesteuert wird, wenn die Leitung an die Senderstelle angeschlossen wird (Aktivzustand) und daß die Transistoren (41, 42) unter Steuerung des Senders betrieben werden.

2. Einrichtung nach Anspruch 1, dadurch gekennzeichnet, daß dem zweiten Gleichrichter eine 'Transistorstufe für effektive Leitungsbelegung nachgeschaltet ist, gefolgt von einem Konstantstromerzeuger, der mindestens die Speisung der Empfangsverstärker und der Sendemodulationsverstärker erlaubt.

3. Einrichtung nach Anspruch 2, dadurch gekennzeichnet, daß die Speisung gewisser Schaltungen des Senders, die im Wachzustand betriebsfähig bleiben, insbesondere seines Mikroprozessors und dessen Zusatzschaltungen, zusätzlich über den Ausgang des Konstantstromerzeugers sichergestellt ist; vom zweiten Gleichrichter, wenn die Leitung an den Sender angeschlossen ist (Aktivzustand) und vom ersten Gleichrichter, wenn die Leitung an das Fernsprechgerät angeschlossen ist (Wachzustand).

4. Einrichtung nach Anspruch 3, dadurch gekennzeichnet, daß weiterhin eine Batteriespeisung vorgesehen ist, mindestens als Reserve und/oder für den Wachzustand, und mindestens zur Sicherung der im Sender gespeicherten Informationen bei Leitungsausfall.

5. Einrichtung nach einem der Ansprüche 1 bis 4, dadurch gekennzeichnet, daß der erste Gleichrichter eine Brücke umfaßt, die die erste Spule direkt speist, während sie die übrige Schaltung über einen, den Strom auf zirka 10 Mikroampere begrenzenden Widerstand speist.

6. Einrichtung nach einem der Ansprüche 1 bis 5, dadurch gekennzeichnet, daß der zweite Gleichrichter eine Brücke, gefolgt von einer Diode und von einem parallel auf Masse geschalteten Kondensator für die Speisung der zweiten Spule umfaßt.

7. Einrichtung nach einem der Ansprüche 1 bis 6, dadurch gekennzeichnet, daß der zweite Transistor mit einem Kondensator ausgestattet ist, der im Fall einer ungewollten Leitungsbelegung zur falschen Zeit die Auslösung der Leitung erlaubt.

8. Einrichtung nach Anspruch 7, dadurch gekennzeichnet, daß der Kondensator parallel zu einer Zenerdiode geschaltet ist.

9. Einrichtung nach einem der Ansprüche 7 und 8, dadurch gekennzeichnet, daß der besagte zweite 'Transistor ein VMOS-Transistor ist, dem eine Ansteuerstufe mit bipolarem Transistor vorgeschaltet ist.

10. Einrichtung nach Anspruch 2 oder nach einem der Ansprüche 3 bis 9 in Verbindung mit Anspruch 2, dadurch gekennzeichnet, daß der Transistorstufe für effektive Leitungsbelegung eine Ansteuerstufe mit offenem Kollektor vorgeschaltet ist.

EP 0 225 231 B1